Europäisches Patentamt

(19) European Patent Office

Office européen des brevets

(11) Numéro de publication : **0 010 026**
**B1**

(12) **FASCICULE DE BREVET EUROPÉEN**

(45) Date de publication du fascicule du brevet :
**17.03.82**

(21) Numéro de dépôt : **79400662.7**

(22) Date de dépôt : **19.09.79**

(51) Int. Cl.³ : **G 05 D 13/62**

(54) **Groupe tournant à caractéristiques dynamiques indépendantes de la vitesse muni de moyens de régulation de la vitesse.**

(30) Priorité : **05.10.78 FR 7828524** .

(43) Date de publication de la demande :
**16.04.80 (Bulletin 80/08)**

(45) Mention de la délivrance du brevet :
**17.03.82 Bulletin 82/11**

(84) Etats contractants désignés :
**CH DE GB IT**

(56) Documents cités :
**US - A - 3 454 752**
**US - A - 3 553 569**

**REVUE GENERALE DE L'ELECTRICITE**
**Tome 82, n° 10, octobre 1973, Paris (FR)**
**A. BONNELIE et al. « Le réglage de vitesse des groupes turbo-alternateurs à resurchauffe alimentant les réseaux d'énergie électrique »**
**pages 599-607**

(73) Titulaire : **CREUSOT-LOIRE**
**42 rue d'Anjou**
**F-75008 Paris (FR)**

(72) Inventeur : **Pugnet, Jean-Marc**
**12 avenue Charles de Gaulle**
**F-71200 Le Creusot (FR)**

(74) Mandataire : **Dupuy, Louis et al**
**CREUSOT-LOIRE 15 rue Pasquier**
**F-75383 Paris Cedex 8 (FR)**

Imprimerie Jouve, 18, rue St-Denis, 75001 Paris, France

Groupe tournant à caractéristiques dynamiques indépendantes de la vitesse muni de moyens de régulation de la vitesse

L'invention concerne la régulation tachymétrique des machines tournantes à caractéristiques dynamiques indépendantes de la vitesse.

En particulier, elle peut s'appliquer aux turbines, à vapeur ou à gaz, entraînant des pompes, des compresseurs centrifuges ou des soufflantes.

Le procédé industriel utilisant une pompe, un compresseur centrifuge ou une soufflante exige dans certains cas de cette machine une plage de fonctionnement extrêmement étendue, pour assurer les différentes marches de l'unité. Cette plage est alors obtenue, d'une part, par la caractéristique propre de la machine entraînée à une vitesse donnée, et d'autre part, par le déplacement de cette caractéristique en faisant varier la vitesse de rotation de la ligne d'arbre.

Les machines énergétiques qui nous intéressent ici reçoivent donc un signal, élaboré à partir de certaines grandeurs physiques du procédé industriel, qui représente la vitesse à laquelle doit tourner la machine afin que l'ensemble du procédé fonctionne ; la plage de vitesses de certaines machines atteint ainsi un rapport de 1 à 2, voire de 1 à 4.

Un dispositif de régulation tachymétrique est installé sur la machine énergétique conduisant la ligne d'arbre.

On a longtemps utilisé les dispositifs de régulation tachymétrique hydraulique ou mécanique (par exemple régulateur de Watt). Les caractéristiques dynamiques de tels dispositifs étaient satisfaisantes.

Toutefois, quand on a commencé à connaître l'électronique, on a préféré abandonner les systèmes hydraulique ou mécanique au profit de systèmes faisant appel à l'électronique ; en effet, on obtenait ainsi des précisions plus fines et un temps de réponse à une variation de vitesse plus court. A titre d'exemple, on peut se reporter au brevet américain n° 3 454 752 qui concerne un groupe tournant constitué d'une ligne d'arbres conduite par une machine motrice munie de moyens électroniques de réglage de vitesse et de régulation de cette vitesse.

Mais l'utilisation de moyens électroniques n'a pas apporté entière satisfaction. En effet, on s'est aperçu que si un groupe tournant muni d'un système de régulation électronique subissait une variation importante de charge, les dispositifs de sécurité placés sur la machine fonctionnaient, provoquant l'arrêt de celle-ci. Ceci était un grave inconvénient puisque le redémarrage de la machine entraînée pouvait alors durer plusieurs heures, ce qui abaissait de façon importante l'efficacité globale du groupe. Cet inconvénient était d'autant plus grave que la cause de ces pannes n'était pas connue.

Le but de la présente invention est donc de tenter de remédier à ces pannes. Il vise un groupe tournant muni d'un système de régulation électronique, qui puisse fonctionner de façon stable même quand le groupe subit une variation importante de charge.

Plus précisément, l'invention concerne un groupe tournant constitué d'une ligne d'arbres conduite par une machine motrice munie de moyens électroniques de réglage de vitesse et de régulation de cette vitesse et, selon l'invention, lesdits moyens électroniques de régulation de la vitesse comportent un capteur de vitesse de type quadratique qui rend indépendant de la vitesse de rotation du groupe le temps de réponse à une variation de cette vitesse.

L'invention ne vise pas le capteur quadratique en lui-même, qui est déjà connu en soi, par exemple par le brevet américain n° 3 553 569, mais l'utilisation nouvelle d'un tel capteur quadratique.

Dans un autre mode de réalisation de l'invention, lesdits moyens électroniques de régulation de la vitesse comportent un régulateur de vitesse muni à sa sortie d'un élément multiplicateur proportionnel à la valeur de la vitesse, produisant le même effet global qu'un capteur de vitesse de type quadratique et rendant indépendant de la vitesse de rotation du groupe le temps de réponse à une variation de cette vitesse.

Mais l'invention sera mieux comprise à l'aide de la description détaillée qui va suivre, en référence aux dessins annexés. Nous allons non seulement décrire les deux modes de réalisation de l'invention mais nous allons également tenter d'expliquer par des calculs et des graphiques comment fonctionnent ces deux modes de réalisation. Ces calculs ont été effectués par l'inventeur à postériori, afin de confirmer par le calcul les résultats surprenant obtenus par l'invention.

La figure 1 représente, dans la configuration du diagramme de BODE, la fonction de transfert régissant la réponse en variation de la vitesse de rotation de la ligne d'arbre d'un groupe tournant quelconque à une variation de puissance de la machine énergétique motrice de ce groupe.

La figure 2 représente une boucle de régulation classique de ce groupe tournant, selon l'art antérieur.

La figure 3 représente, dans la configuration du diagramme de BODE, la fonction de transfert de la boucle ouverte de régulation de la figure 2.

La figure 4 représente une boucle de régulation du groupe tournant suivant un premier mode de réalisation du dispositif selon l'invention.

La figure 5 représente une boucle de régulation du groupe tournant suivant un deuxième mode de réalisation du dispositif selon l'invention.

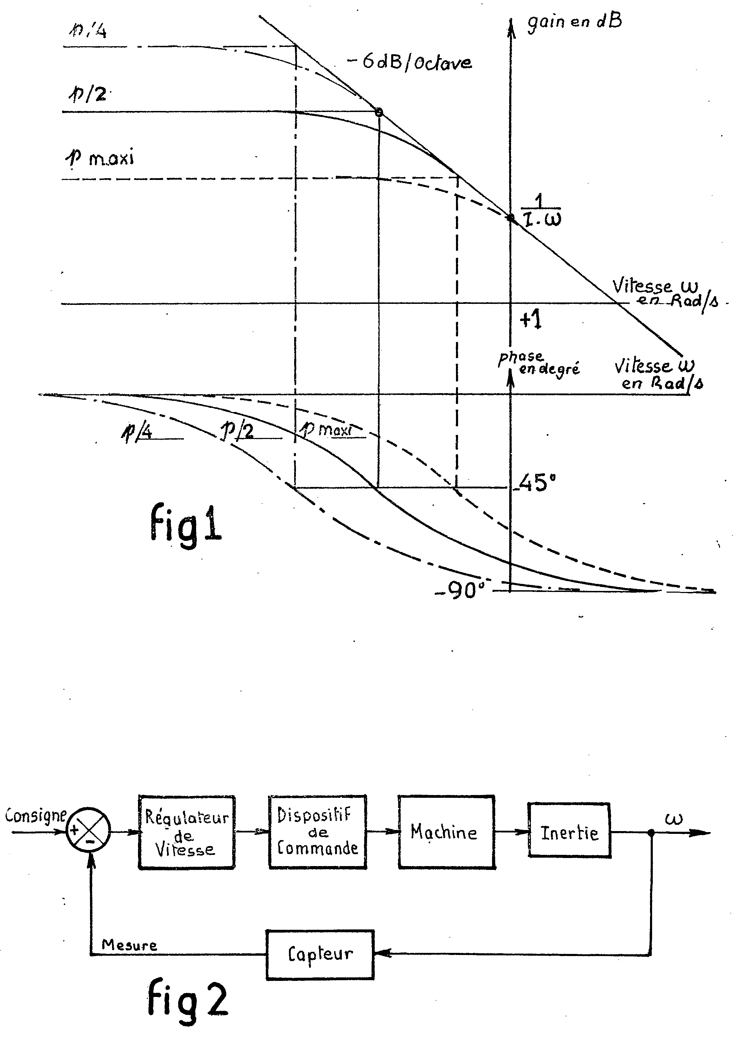

On se référera tout d'abord à la figure 1.

Pour tracer le diagramme de la figure 1, nous avons tout d'abord déterminé la fonction de transfert régissant la réponse en variation de vitesse de rotation de la ligne d'arbre d'un groupe tournant à une variation de la machine motrice du groupe.

Nous avons utilisé les notations suivantes :

Puissance développée par la machine motrice : p

Transformée de Laplace de la variation de puissance : P

Couple exercé sur la ligne d'arbre : c

Couple moteur : cm

Couple résistant : cr

Variation de la vitesse : $d\omega$

Transformée de Laplace de la variation de vitesse : $\Omega$

Coefficient définissant la caractéristique de la machine centrifuge entraînée : K

Variable temporelle : t

Variable de Laplace : s

L'ensemble de la ligne d'arbre étant en marche stabilisée, on a :

$$cm = cr$$
$$p = \omega \cdot cm$$

Lorsqu'apparaît une perturbation, il vient :

$$cm + dcm = cr + dcr + I \, d\omega/dt$$
$$dp = \omega \cdot dcm + cm \cdot d\omega$$

La machine entraînée étant de type centrifuge, son couple résistant à une marche donnée est de la forme : $cr = K\omega^2$ ; à une autre marche, K prendra une autre valeur. Il vient alors

$$dp = \omega(2 \cdot K \cdot \omega \cdot d\omega + I \, d\omega/dt) + cm \cdot d\omega$$
$$dp = (cm + 2 \cdot K \cdot \omega^2) \, d\omega + I \cdot \omega \cdot d\omega/dt$$
$$dp = 3 \cdot cm \cdot d\omega + I \cdot \omega \cdot d\omega/dt$$

Cette expression devient, après passage en transformée de Laplace :

$$P = (3 \cdot cm + I \cdot \omega \cdot s) \, \Omega$$

La réponse en variation de vitesse de rotation de la ligne d'arbre à une variation de puissance de la machine énergétique motrice est donc réglée par la fonction de transfert :

$$T_1 = \Omega/P = 1/3 \, cm + I\omega s = \omega/3 \cdot p + I \cdot \omega^2 \cdot s$$

$$T_1 = \omega/3 \cdot p \times 1/1 + I\omega^2/3 \, ps$$

Sur la figure 1, on a représenté le diagramme de bode de cette fonction de transfert pour plusieurs marches en puissance de la machine motrice (p maxi ; p/2 et p/4) et pour une vitesse de rotation donnée.

Les vitesses exprimées en Rad/s (radians par secondes), sont portées en abscisse sur une échelle logarithmique ; le gain et la phase, exprimés respectivement en dB (décibels) et en degrés, sont portés en abscisse sur une échelle linéaire.

La propriété caractéristique de cette fonction de transfert est que l'asymptote à − 6 dB par octave coupe l'axe vertical correspondant à la pulsation de 1 radian par seconde pour la valeur :

$$\omega/3 \cdot p \times 3 \cdot p/I \cdot \omega^2 = 1/I \cdot \omega$$

c'est-à-dire une valeur indépendante de la puissance et de la caractéristique de la machine entraînée (p et K n'interviennent pas), mais qui est fonction uniquement :

— de I, l'inertie mécanique de la ligne d'arbre qui est donc constante,

— de $\omega$, qui est la vitesse de rotation à la marche correspondante.

On pourrait montrer facilement que si l'on n'introduit pas dans la fonction de transfert la caractéristique de la machine entraînée par sa variation de couple résistant en fonction de la vitesse de rotation, on obtient une autre expression de la fonction de transfert qui possède la même propriété caractéristique et qui présente la même valeur $1/I\omega$, ce qui étend le cadre de l'invention à d'autres machines entraînées qui ne seraient pas de type centrifuge (ce qui est le plus souvent le cas pour les machines fonctionnant à vitesse variable).

Dans une boucle de régulation classique (selon l'art antérieur) de vitesse de la ligne d'arbre, les autres éléments sont (voir fig. 2) :

— un capteur de vitesse, de type linéaire,

— un régulateur de vitesse, avec ses actions appropriées,

— un dispositif de commande (pour une turbine à vapeur par exemple, ce dispositif est un amplificateur d'effort en asservissement à la position des soupapes),

— un organe de puissance constitué par la machine énergétique qui développe une certaine puissance mécanique (en fonction du débit que laissent passer les soupapes dans le cas de la turbine à vapeur).

L'ensemble correspondant possède une fonction de transfert, fonction des caractéristiques de la machine dans son gain et ses pulsations de coupure, mais indépendante de la vitesse de la ligne d'arbre :

$$T_2 = A \times \Pi k(1 + Tk \cdot s)/\Pi n(1 + Tn \cdot s).$$

La fonction de transfert en boucle ouverte T de la boucle de régulation représentée sur la figure 2 est constituée par le produit des fonctions de transfert $T_1$ et $T_2$.

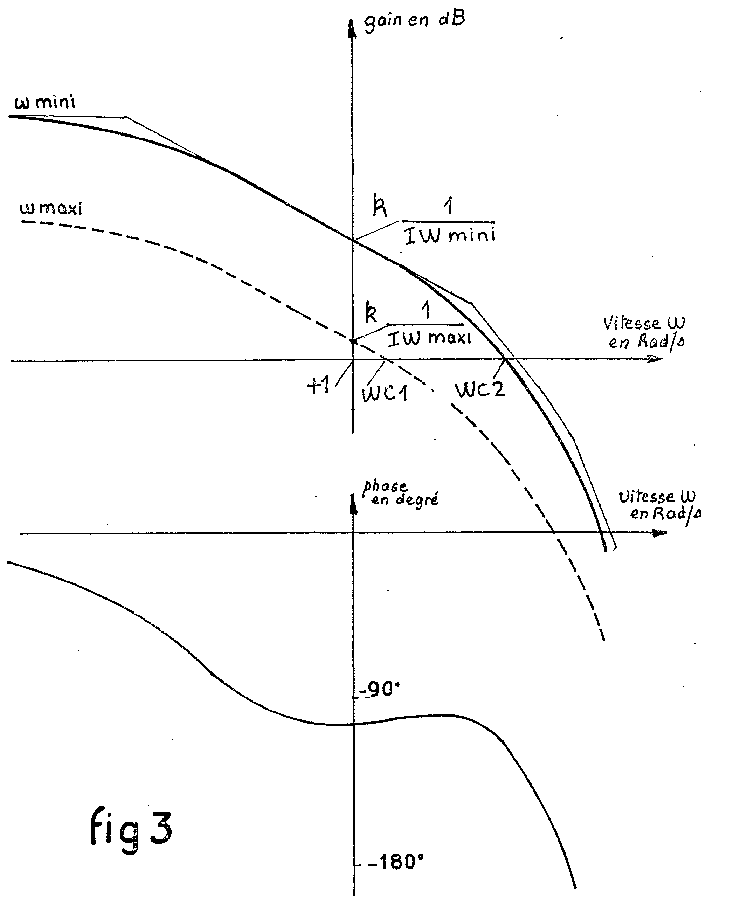

Le diagramme de BODE de la fonction T est donné à la figure 3. Les échelles et les unités employées dans ce diagramme sont les mêmes que pour celui de la figure 1.

On voit clairement sur cette figure que le réglage du régulateur est établi pour la valeur maximale de la courbe de gain tracée en trait continu (et conditions correspondantes de phase) pour obtenir la stabilité ; ceci est obtenu pour la vitesse minimale de fonctionnement. L'asymptote à − 6 dB par octave de cette courbe coupe l'axe vertical pour une valeur proportionnelle à $1/I \cdot \omega$ mini (de la même façon que, sur la fig. 1, l'asymptote à − 6 dB par octave coupait cet axe pour la valeur $1/I\omega$).

On voit également que la courbe de gain tracée en traits pointillés pour la valeur maximale de la vitesse de fonctionnement coupe l'axe vertical pour une valeur proportionnelle à $1/I \cdot \omega$ maxi ; cette courbe est donc abaissée par rapport à la précédente d'un coefficient $\omega$ mini/$\omega$ maxi. Toutefois l'allure générale de la courbe n'est pas déformée, ce qui entraîne la même diminution relative de la pulsation de coupure $\omega_c$ de la boucle ouverte, et par-là-même une diminution de la pulsation de coupure de la boucle fermée ($\omega_{c_1} = \omega_{c_2} \cdot \omega$ mini/$\omega$ maxi).

Les pulsations de coupure $\omega_c$ et par la suite les temps de réponse $1/\omega_c$ sont donc affectés par la vitesse de fonctionnement du groupe tournant.

Nous allons décrire maintenant les deux modes de réalisation de l'invention et nous rendre compte que ces deux modes permettent d'obtenir des temps de réponse qui ne sont plus affectés par la vitesse de fonctionnement du groupe tournant.

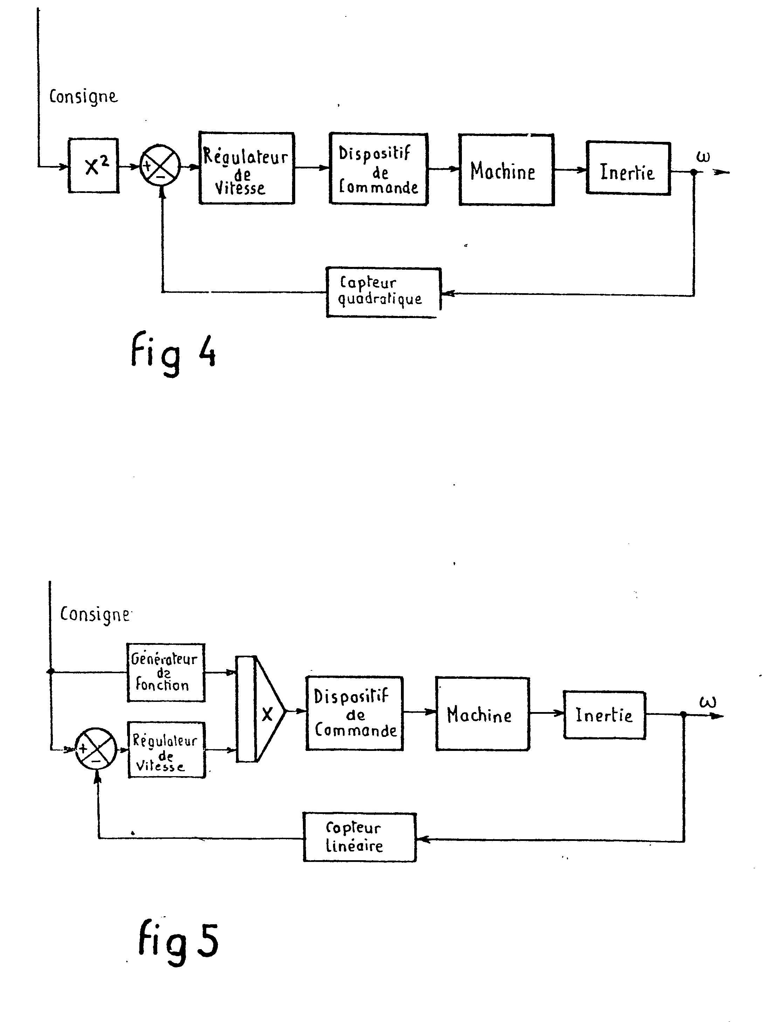

La figure 4 représente le premier mode de réalisation du dispositif de régulation selon l'invention : le capteur tachymétrique que l'on utilise est de type quadratique. La sortie de ce capteur étant $D \cdot \omega^2$ ($D$ = constante), le gain de sa fonction de transfert est $2 D\omega$ dont le produit avec le terme $1/I\omega$ est indépendant de $\omega$.

Un élévateur au carré sur la consigne s'avère indispensable si l'on veut conserver la linéarité consigne-mesure.

La figure 5 représente le deuxième mode de réalisation du dispositif de régulation selon l'invention ; on a introduit un élément multiplicateur proportionnel à la vitesse, à la sortie du régulateur de vitesse, qui, multiplié par le terme $1/I\omega$, donne une constante.

Généralement, le rendement de la machine varie en particulier en fonction de la vitesse de fonctionnement et ceci de façon calculable. Afin de conserver tous les avantages de la technique de l'invention, il est possible de moduler le terme multiplicateur proportionnel à la valeur de la vitesse, de la fonction inverse du rendement en fonction de la vitesse. Ceci peut être réalisé par exemple au moyen d'un générateur de fonction introduit convenablement dans la boucle.

Ainsi, nous constatons que l'invention permet de rendre les pulsations de coupure $\omega_c$ et par conséquent les temps de réponse $1/\omega_c$ indépendants de la vitesse de fonctionnement du groupe. En effet, en introduisant dans la boucle un terme multiplicateur proportionnel à la valeur de la vitesse, le produit de ce terme, $B\omega$, par le terme $1/I\omega$ provenant de l'inertie de la ligne d'arbres, devient une constante.

Dans le cas d'une variation importante de charge, qui nécessite une variation importante de la vitesse, cette variation s'effectue suffisamment rapidement, (puisque le temps de réponse qui est constant ne peut pas prendre de valeur très importante) pour que les dispositifs de sécurité placés sur la machine ne fonctionnent pas. Les pannes sont ainsi évitées.

Bien entendu, l'invention n'est pas strictement limitée aux modes de réalisation décrits à titre d'exemples mais elle couvre également les réalisations qui n'en différeraient que par des détails, par des variantes d'exécution ou par l'utilisation de moyens équivalents.

## Revendications

1. Groupe tournant constitué d'une ligne d'arbres conduite par une machine motrice munie de moyens électroniques de réglage de vitesse et de régulation de cette vitesse, caractérisé par le fait que lesdits moyens électroniques de régulation de la vitesse comportent un capteur de vitesse de type quadratique qui rend indépendant de la vitesse de rotation du groupe le temps de réponse à une variation de cette vitesse.

2. Groupe tournant constitué d'une ligne d'arbres conduite par une machine motrice munie de moyens électroniques de réglage de vitesse et de régulation de cette vitesse, caractérisé par le fait que lesdits moyens électroniques de régulation de la vitesse comportent un régulateur de vitesse muni à sa sortie d'un élément multiplicateur proportionnel à la valeur de la vitesse, produisant le même effet global qu'un capteur de vitesse de type quadratique et rendant indépendant de la vitesse de rotation du groupe le temps de réponse à une variation de cette vitesse.

## Claims

1. A rotating group consisting of a line of shafts driven by a driving machine equipped with electronic means of adjustment of speed and of governing this speed, characterized by the fact that the said electronic means of governing the speed include a speed pick-up of quadratic type which renders the time of response to a variation in the speed of rotation of the group, independent of this speed.

2. A rotating group consisting of a line of shafts driven by a driving machine equipped with electronic means of adjustment of speed and of governing this speed, characterized by the fact that the said electronic means of governing the speed include a speed governor equipped at its output with a speed-value-proportional multiplier element which produces the same overall effect as a speed pick-up of quadratic type and which renders the time of response to a variation in the speed of rotation of the group, independent of this speed.

## Ansprüche

1. Umlaufender Maschinensatz bestehend aus einem durch eine Antriebsmaschine mit elektronischen Mitteln zur Drehzahl-Verstellung und -Regelung betriebenen Wellenstrang, dadurch gekennzeichnet, dass die genannten elektronischen Drehzahlregelungsmittel einen Drehzahlgeber quadratischen Typs aufweisen, der die Ansprechzeit bei Änderung der Drehzahl von der Drehzahl des umlaufenden Maschinensatzes unabhängig macht.

2. Umlaufender Maschinensatz bestehend aus einem durch eine Antriebsmaschine mit elektronischen Mitteln zur Drehzahl-Verstellung und -Regelung betriebenen Wellenstrang, dadurch gekennzeichnet, dass die genannten elektronischen Drehzahlregelungsmittel einen Drehzahlregler aufweisen, der an seinem Ausgang mit einem zum Drehzahlwert proportionalen Vervielfacher ausgestattet ist, die gleiche Gesamtwirkung wie ein Drehzahlgeber quadratischen Typs hat und die Ansprechzeit bei Änderung der Drehzahl von der Drehzahl des umlaufenden Maschinensatzes unabhängig macht.

**0 010 026**

fig1

fig2

fig 3

fig 4

fig 5